# EUROPEAN PATENT SPECIFICATION

(11) **EP 3 399 333 B1**
(45) Date of publication and mention of the grant of the patent: **27.10.2021**
(21) Application number: 16880608.1
(22) Date of filing: 19.08.2016
(51) Int. Cl.: G01S 13/89, G01S 7/02

(54) **MILLIMETER WAVE THREE-DIMENSIONAL HOLOGRAPHIC SCANNING IMAGING DEVICE**
VORRICHTUNG ZUR DREIDIMENSIONALEN HOLOGRAPHISCHEN ABTASTENDEN BILDGEBUNG MIT MILLIMETERWELLEN
DISPOSITIF D'IMAGERIE À BALAYAGE HOLOGRAPHIQUE EN TROIS DIMENSIONS D'ONDE MILLIMÉTRIQUE

(30) Priority: 28.12.2015 CN 201511001144
(43) Date of publication of application: 07.11.2018
(73) Proprietor: Nuctech Company Limited, TongFang Building, Shuangqinglu, Haidian District Beijing 100084 (CN)
(72) Inventor: CHEN, Zhiqiang, Beijing 100084 (CN); ZHAO, Ziran, Beijing 100084 (CN); LI, Junli, Beijing 100084 (CN); WANG, Ziye, Beijing 100084 (CN); WU, Wanlong, Beijing 100084 (CN); SHEN, Zongjun, Beijing 100084 (CN); QIAO, Lingbo, Beijing 100084 (CN)
(74) Representative: Cabinet Beau de Loménie
(86) International application number: PCT/CN2016/096000
(87) International publication number: WO 2017/113815

(56) References cited:
- CN-A- 101 866 018
- CN-A- 104 375 142
- CN-A- 104 375 143
- CN-A- 104 375 144
- CN-A- 104 375 145
- CN-A- 104 375 145
- CN-A- 105 467 386
- CN-U- 203 385 855
- CN-U- 203 385 856
- CN-U- 203 385 857
- CN-U- 204 228 955
- CN-U- 204 228 955
- CN-U- 205 263 309
- US-A1- 2003 117 310
- US-A1- 2004 263 379
- US-A1- 2015 048 251

## Description

### CROSS-REFERENCE TO RELATED APPLICATION

This application claims priority of Chinese Patent Application No. 201511001144.X filed on December 28, 2015 in the State Intellectual Property Office of China.

### BACKGROUND OF THE DISCLOSURE

### Field of the Disclosure

The present invention generally relates to a technical field of security inspection, in particular to a millimeter wave three dimensional holographic scan imaging apparatus.

### Description of the Related Art

As public security becomes increasingly serious, it has been an urgent problem that human body security inspection is performed fast and efficiently in crowed places such as airports, subway stations. At present, the human body security inspection at airports is performed mainly by means of metal detectors held by hands of security inspectors, which can scan the whole body of passengers. In this way, only metal articles can be detected efficiently, and private parts cannot be inspected. A human body security inspection apparatus mainly includes an X-ray backscattering human body imaging apparatus and a millimeter wave human body imaging apparatus. The X-ray backscattering human body imaging apparatus generates images by using signals scattered back from the human body surface after the X-ray is incident on the human body surface. As the X-ray has ionization property, the safety of the X-ray backscattering human body imaging apparatus in use tends to be doubted by the public. The millimeter wave human body imaging apparatus mainly includes two types, i.e., an active millimeter wave human body imaging apparatus and a passive millimeter wave human body imaging apparatus. The image quality of the active millimeter wave imaging is significantly better than that of the passive millimeter wave imaging. The good imaging effects ensure high recognition rate for forbidden articles. Thus, the active millimeter wave human body imaging apparatus has gradually become prominent in development of the human body security inspection. The active millimeter wave imaging technology is mainly related to holographic imaging technology. Prior art document CN 104 375 145 describes a millimeter wave imaging method and system.

In the active millimeter wave three dimensional holographic imaging technology for the human body security inspection, cylinder scanning imaging technology is applied widely, however, the cylinder scanning imaging apparatus has a large footprint and cannot image four sides of an object to be inspected entirely.

### SUMMARY OF THE DISCLOSURE

An object of the present invention is to provide a millimeter wave three dimensional holographic scan imaging apparatus which can fast and efficiently perform the millimeter wave three dimensional holographic scan imaging of all of sides of an object to be inspected (such as a human body or an article).

An embodiment of the present invention provides a millimeter wave three dimensional holographic scan imaging apparatus defined in the appended claim 1. Another embodiment of the present invention provides a millimeter wave three dimensional holographic scan imaging apparatus defined in the appended claim 8.

In an embodiment, the scanning direction of each of the at least one millimeter wave transceiver antenna array is a vertical direction and each of the at least one millimeter wave transceiver antenna array extends along a horizontal direction.

In an embodiment, the at least one millimeter wave transceiver antenna array includes a millimeter wave transceiver antenna array having a circular ring shape.

In an embodiment, the inlet and the outlet are arranged at both sides of the inspection region respectively.

According to the invention, the millimeter wave three dimensional holographic scan imaging apparatus further includes: a first door device arranged at the inlet; and a second door device arranged at the outlet, wherein the first door device and the second door device are closed when the at least one millimeter wave transceiver antenna array scans, and opened before the at least one millimeter wave transceiver antenna array scans or after the at least one millimeter wave transceiver antenna array scans.

In an embodiment, each of the first door device and the second door device has a first wall and a second wall, wherein at least one of the millimeter wave transceiver antenna array is configured to pass between the first wall and the second wall while scanning.

In an embodiment, the first wall is closer to the inspecting region than the second wall and the first wall is at least partly transparent to the millimeter wave signal.

According to the invention, the at least one millimeter wave transceiver antenna array includes a first millimeter wave transceiver antenna array and a second millimeter wave transceiver antenna array, the first millimeter wave transceiver antenna array being configured to transmit and receive a first millimeter wave signal and the second millimeter wave transceiver antenna array being configured to transmit and receive a second millimeter wave signal; the at least one guiding device includes a first guiding device and a second guiding device, wherein the first millimeter wave transceiver antenna array is connected to the first guiding device so as to move along with the first guiding device along a first scanning track to scan a first side of the object to be inspected and the second millimeter wave transceiver antenna array is connected to the second guiding device so as to move along with the second guiding device along a second scanning track to scan a second side of the object.

According to the invention, the first millimeter wave transceiver antenna array and the second millimeter wave transceiver antenna array combine to surround the object entirely.

In an embodiment, each of the first millimeter wave transceiver antenna array and the second millimeter wave transceiver antenna array has a circular arc shape.

In an embodiment, the inlet and the outlet are arranged at both sides of the inspection region respectively.

In an embodiment, the first millimeter wave transceiver antenna array has a circular arc shape and the second millimeter wave transceiver antenna array has a linear shape.

In an embodiment, the inlet and the outlet are arranged at a same side of the inspection region.

In an embodiment, the millimeter wave three dimensional holographic scan imaging apparatus further includes a rotation door having a first rotation position in which the rotation door closes the inlet and the outlet and a second rotation position in which the rotation door opens the inlet and the outlet, wherein the rotation door and the second millimeter wave transceiver antenna array are arranged at a same side of the millimeter wave three dimensional holographic scan imaging apparatus.

In an embodiment, each of the inlet and outlet is located between the first millimeter wave transceiver antenna array and the second millimeter wave transceiver antenna array.

In an embodiment, the driver includes a driving wheel and the guiding device includes a transmission belt engaged with the driving wheel.

At least one of the above embodiments of the present invention can simultaneously scan peripheral sides of the object to be inspected by at least one millimeter wave transceiver antenna array and improve the inspection efficiency and reduce the apparatus volume by providing the inlet and the outlet reasonably.

### BRIEF DESCRIPTION OF THE DRAWINGS

Figure 1 is a schematic view showing a structure of a millimeter wave three dimensional holographic scan imaging apparatus according to an embodiment of the present invention;
Figure 1a is a schematic view showing a structure of a first door device or a second door device in a millimeter wave three dimensional holographic scan imaging apparatus according to an embodiment of the present invention;
Figure 2 is a schematic view showing a millimeter wave three dimensional holographic scan imaging apparatus according to another embodiment of the present invention;
Figure 3 is a schematic view showing a millimeter wave three dimensional holographic scan imaging apparatus according to a further embodiment of the present invention; and
Figure 4 to Figure 6 are schematic top views showing a plurality of examples of arrangement of the inlet, the outlet and the millimeter wave transceiver antenna array in a millimeter wave three dimensional holographic scan imaging apparatus according to an embodiment of the present invention, respectively.

### DETAILED DESCRIPTION OF THE EMBODIMENTS

Technical solutions of the present invention will be described hereinafter in more detail by way of embodiment with reference to the attached drawings. The same or similar reference numerals refer to the same or similar elements throughout the description. The explanation of the embodiments of the present invention with reference to the accompanying drawings is intended to interpret the general inventive concept of the present invention, rather than being construed as limiting the present invention.

In accordance with the generic concept of the present invention, it provides a millimeter wave three dimensional holographic scan imaging apparatus, including: at least one millimeter wave transceiver and at least one millimeter wave transceiver antenna array electrically connected to the at least one millimeter wave transceiver respectively, the at least one millimeter wave transceiver antenna array being configured to transmit and receive at least one millimeter wave signal; at least one guiding device, to which the at least one millimeter wave transceiver antenna array is connected respectively such that the at least one millimeter wave transceiver antenna array moves along with the at least one guiding device to scan peripheral sides of an object to be inspected, the at least one millimeter wave transceiver antenna array extending in a direction perpendicular to the at least one guiding device respectively; a driver configured to drive the at least one guiding device to move so as to drive the at least one millimeter wave transceiver antenna array to scan along a linear track; and a housing configured to surround an inspection region in which the object is located during an inspection, the housing being formed with an inlet for the object entering the inspection region and an outlet for the object exiting the inspection region.

In addition, in the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

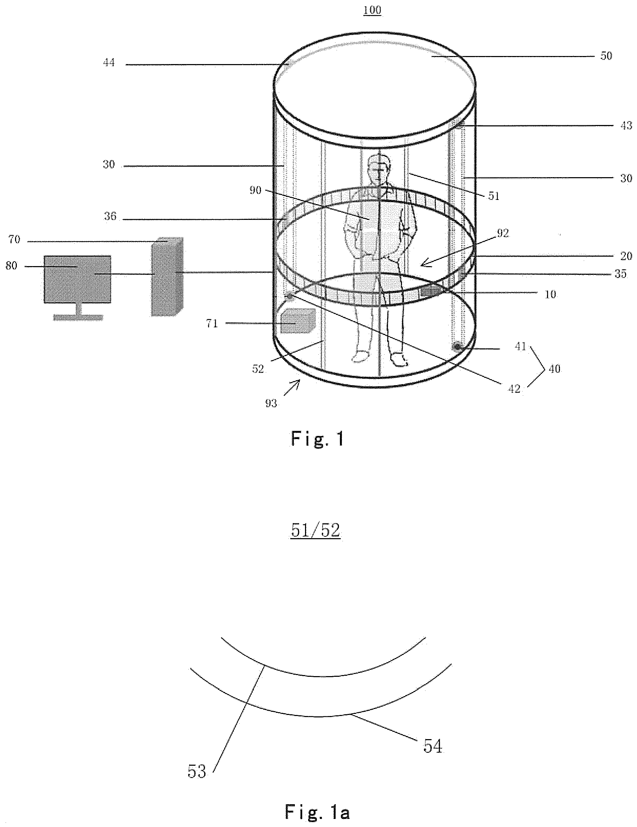

Fig. 1 shows schematically a millimeter wave three dimensional holographic scan imaging apparatus 100 according to an embodiment of the present invention. The millimeter wave three dimensional holographic scan imaging apparatus 100 may include: a millimeter wave transceiver 10 and a millimeter wave transceiver antenna array 20 electrically connected to the millimeter wave transceiver 10, the millimeter wave transceiver antenna array 20 being configured to transmit and receive a millimeter wave signal; a guiding device 30, to which the millimeter wave transceiver antenna array 20 is connected such that the millimeter wave transceiver antenna array 20 moves along with the guiding device 30 to scan peripheral sides of an object 90 to be inspected, the millimeter wave transceiver antenna array 20 extending in a direction perpendicular to the guiding device 30; a driver 40 (for example, a driving wheel and a motor thereof, or the like) configured to drive the guiding device 30 to move so as to drive the millimeter wave transceiver antenna array to scan along a linear track; and a housing 50 configured to surround an inspection region 91 in which the object 90 is located during the inspection, the housing 50 being formed with an inlet 92 for the object 90 entering the inspection region 91 and an outlet 93 for the object 90 exiting the inspection region 91. As an example, the housing 50 may have a cylindrical shape. As an example, the millimeter wave transceiver antenna array 20 may be located at the inner side of the housing 50, at the outer side of the housing 50 or in the housing 50.

The millimeter wave three dimensional holographic scan imaging apparatus according to the embodiment of the present invention uses a structure having an inlet 92 and an outlet 93 separated from each other. The object to be inspected (for example the human body or article) may conveniently enter the apparatus from the inlet 92 before the inspection and exit the apparatus from the outlet 93 after the inspection. In comparison with the conventional inspection apparatus with only one gateway, the object may enter and exit the inspection region without turning around, which may improve the inspection efficiency. It is advantageous in particular for the security inspection at crowded places such as airports or rail stations.

In an example, as shown in Figure 1, the scanning direction of the millimeter wave transceiver antenna array 20 is a vertical direction and the millimeter wave transceiver antenna array 20 extends along a horizontal direction. Such arrangement is helpful to the convenience of scanning of the peripheral sides of the object. In an example shown in Figure 1, the millimeter wave transceiver antenna array 20 has a circular ring shape. The millimeter wave transceiver antenna array 20 with the circular ring shape surrounds the object entirely. Only one scanning from top to bottom (or from bottom to top) is needed for collecting the millimeter wave data for all sides of the object, so as to achieve millimeter wave holographic imaging in full field of view. It has a simple operation and convenient control. However, the skilled person in the art should understand that, although one millimeter wave transceiver antenna array 20 with circular shape is used in the above example, the embodiments of the present invention are not limited to this. Alternatively, more millimeter wave transceiver antenna arrays 20 may also be used to scan, for example, the millimeter wave transceiver antenna array 20 with circular shape may be divided into a plurality of separate circular arc-shaped millimeter wave transceiver antenna arrays 20 along the circumferential direction, which also may achieve scanning of the object. Use of the plurality of millimeter wave transceiver antenna arrays 20 may reduce the weight of the single millimeter wave transceiver antenna array 20 to improve the flexibility of the operation.

As an example, the inlet 92 and the outlet 93 are arranged at both sides of the inspection region 91 respectively, as shown in Figure 1 to Figure 2. It is beneficial to improve the efficiency of the object passing through the inspection region 91, in particular when the object needs to queue for inspection.

In an example, the millimeter wave three dimensional holographic scan imaging apparatus 100 may further include: a first door device 51 arranged at the inlet 92 and a second door device 52 arranged at the outlet 93. The first door device 51 and the second door device 52 are closed when the millimeter wave transceiver antenna array 20 scans, and opened before the millimeter wave transceiver antenna array 20 scans or after the millimeter wave transceiver antenna array 20 scans. The first door device 51 and the second door device 52 can provide a closed environment for the inspection region 91 when the millimeter wave transceiver antenna array 20 scans. For the case that the millimeter wave transceiver antenna array 20 passes through the inlet 92 and the outlet 93 during scanning, the first door device 51 and the second door device 52 may prevent the millimeter wave transceiver antenna array 20 from being exposed to the object 90 during scanning to avoid risk or adverse effects to the object 90. After ending the scanning, the millimeter wave transceiver antenna array 20 may be hidden at the top or bottom of the housing 50 without hindering the object 90 to pass through the inlet 92 and the outlet 93.

As an example, each of the first door device 51 and the second door device 52 may have a first wall 53 and a second wall 54. The millimeter wave transceiver antenna array 20 may pass between the first wall 53 and the second wall 54 while scanning. It may prevent the millimeter wave transceiver antenna array 20 from being exposed to the object to be inspected or the persons outside the millimeter wave three dimensional holographic scan imaging apparatus to avoid accident. Similarly, the housing 50 may also use a wall structure of double layers similar to the first door device 51 and the second door device 52 to accommodate the millimeter wave transceiver antenna array 20 between the double layers.

In an example, the first wall 53 is closer to the inspecting region 91 than the second wall 54 and the first wall 53 is at least partly transparent to the millimeter wave signal, for example completely transparent to the millimeter wave signal. It may ensure the millimeter wave transceiver antenna array 20 to transmit and receive the millimeter wave signals. As an example, the second wall 54 may have effect of shielding the millimeter wave signals, to prevent the millimeter wave signals from disturbing the ambient environment. As an example, the first door device 51 and the second door device 52 may be circular arc-shaped automatic doors.

In an example, the millimeter wave three dimensional holographic scan imaging apparatus 100 may further include a data processing device 70. The data processing device 70 is connected by wireless or wires to the millimeter wave transceiver to receive scanning data of four sides of the object from the millimeter wave transceiver and generate a millimeter wave holographic image. The millimeter wave three dimensional holographic scan imaging apparatus 100 may further include a display device 80. The display device 80 is connected to the data processing device 70 and configured to receive and display the millimeter wave holographic image from the data processing device 70.

In an example, the data processing device 70 may be configured to control the driver 40 to drive the millimeter wave transceiver antenna array 20 to move. In another example, the millimeter wave three dimensional holographic scan imaging apparatus 100 may also include a controller 71 separated from the data processing device 70.

As an example, the driver 40 may include driving wheels 41-42 which may be driven by a driving shaft and a driving motor to rotate. Some driven wheels may also be provided as required. Although Figure 1 shows two driving wheels 41-42 and two driven wheels 43, 44, the number of the driving wheels and the number of the driven wheels are not limited to this in the embodiments of the present invention. One, two, three or more than four driving wheels or driven wheels may also be used. In the case where a plurality of driving wheels are used, these driving wheels may work independently, or work in cooperation.

As an example, the guiding device 30 may include a transmission belt engaged with the driving wheels 41-42, for example, any known members in the art that can achieve the above transmission function such as a leather belt, a cable.

As an example, the millimeter wave transceiver antenna array 20 may be fixed to the guiding device 30 by fixing devices 35, 36. The fixing devices 35, 36 may include sliding bases, clips or the like.

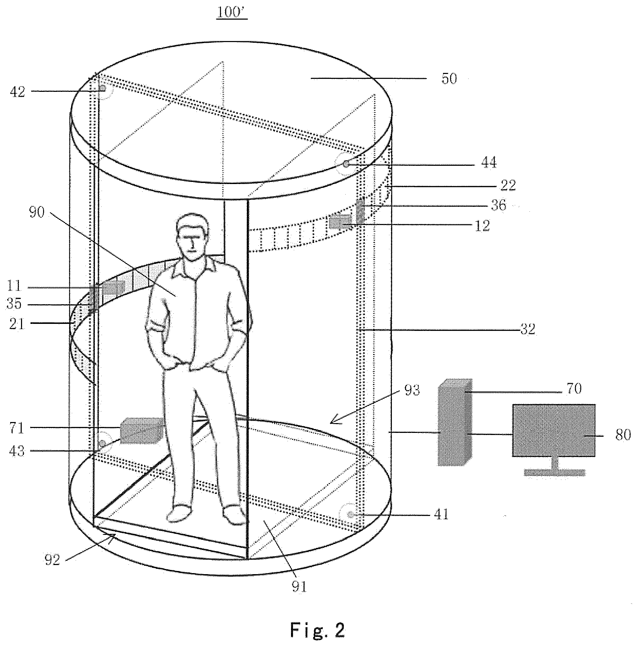

Figure 2 shows a millimeter wave three dimensional holographic scan imaging apparatus 100' according to another embodiment of the present invention. In the millimeter wave three dimensional holographic scan imaging apparatus 100', a first millimeter wave transceiver antenna array 21 and a second millimeter wave transceiver antenna array 22 are provided. The first millimeter wave transceiver antenna array 21 is configured to transmit and receive a first millimeter wave signal and the second millimeter wave transceiver antenna array 22 is configured to transmit and receive a second millimeter wave signal. Correspondingly, the millimeter wave three dimensional holographic scan imaging apparatus 100' further has a first guiding device 31 and a second guiding device 32. The first millimeter wave transceiver antenna array 21 is connected to the first guiding device 31 so as to move along with the first guiding device 31 along a first scanning track to scan a first side of the object 90 to be inspected. The second millimeter wave transceiver antenna array 22 is connected to the second guiding device 32 so as to move along with the second guiding device 32 along a second scanning track to scan a second side of the object. As an example, a first millimeter wave transceiver 11 and a second millimeter wave transceiver 12 corresponding to the first millimeter wave transceiver antenna array 21 and the second millimeter wave transceiver antenna array 22 may also be provided.

In the example shown in Figure 2, the inlet 91 and the outlet 92 are located at both sides of the inspection region 91 respectively. The first millimeter wave transceiver antenna array 21 and the second millimeter wave transceiver antenna array 22 may be arranged opposite to each other, so as to keep away from the inlet 91 and the outlet 92. In this case, the door devices may not be provided at the inlet 91 and the outlet 92. In order to achieve as large scanning area as possible during scanning the object to be inspected, each of the first millimeter wave transceiver antenna array 21 and the second millimeter wave transceiver antenna array 22 may have a circular arc shape. The first guiding device 31 and the second guiding device 32 may be guiding devices separated from each other, for example, transmission belts, guide rails separated from each other, or may be formed by two different parts of one entire transmission belt. In the latter case, during scanning, the first millimeter wave transceiver antenna array 21 and the second millimeter wave transceiver antenna array 22 will have to move in opposite directions. However, it is beneficial to simplify the design of the driver 40. Similar to the above embodiments, the first guiding device 31 and the second guiding device 32 may be driven by a driving device such as the driving wheel. Correspondingly, it may also include the above structures such as the data processing device 70, the display device 80 and the controller 71. With such structure shown in Figure 2, it is also possible for the object to pass and to be inspected fast and most parts of the peripheral sides of the object (other than the parts facing towards the inlet 91 and the outlet 92) may also be scanned.

In an example, the transmission belt may also constrain the scanning movements of the first millimeter wave transceiver antenna array 21 and the second millimeter wave transceiver antenna array 22 to some extent while achieving transmission, for example, the first millimeter wave transceiver antenna array 21 and the second millimeter wave transceiver antenna array 22 may have to move in opposite directions at the same speed.

In another example, the first millimeter wave transceiver antenna array 21 and the second millimeter wave transceiver antenna array 22 may also be combined to surround the object 90 entirely, so as to achieve an entire scanning of all of sides of the object 90. For example, the millimeter wave transceiver antenna array 20 having circular ring shape in the example shown in Figure 1 may be replaced by two millimeter wave transceiver antenna arrays having semi-circular ring shape.

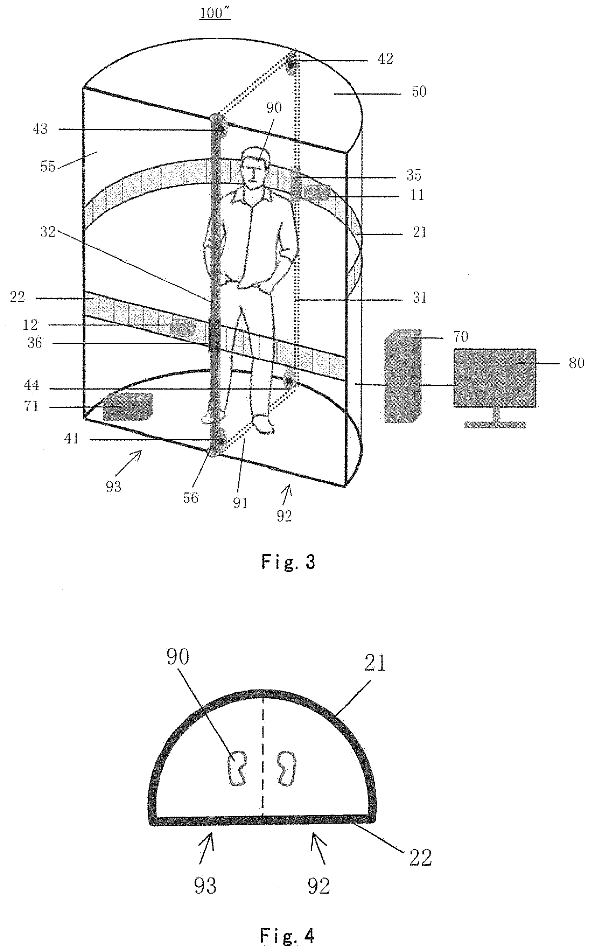

Figure 3 shows a millimeter wave three dimensional holographic scan imaging apparatus 100" according to a further embodiment of the present invention. In the millimeter wave three dimensional holographic scan imaging apparatus 100", similar to the above millimeter wave three dimensional holographic scan imaging apparatus 100' as shown in Figure 2, the first millimeter wave transceiver antenna array 21, the second millimeter wave transceiver antenna array 22, the first guiding device 31, the second guiding device 32, the driver 40 and so on are also provided. However, in the example shown in Figure 3, the first millimeter wave transceiver antenna array 21 has a circular arc shape and the second millimeter wave transceiver antenna array 22 has a linear shape. Correspondingly, as shown in Figure 3, the housing 50 has a semi-cylindrical shape.

As an example, the inlet 92 and the outlet 93 may be arranged at the same side of the inspection region 91. By means of a rotatable door 55, the object to be inspected may enter the millimeter wave three dimensional holographic scan imaging apparatus 100" from the inlet 92 or exit the millimeter wave three dimensional holographic scan imaging apparatus 100" from the outlet 93. The rotatable door 55 may have a first rotation position and a second rotation position. In the first rotation position, the rotation door 55 closes the inlet 92 and the outlet 93. In the second rotation position, the rotation door 55 opens the inlet 92 and the outlet 93. The rotatable door 55 and the second millimeter wave transceiver antenna array 22 are arranged at a same side of the millimeter wave three dimensional holographic scan imaging apparatus 100". Figure 3 shows the position in which the rotatable door 55 is closed, that is, the first rotation position. When the rotatable door 55 for example rotates by 90 degrees about a rotation axis 56 from the first rotation position, the inlet 92 and the outlet 93 may be opened to the second rotation position. In an example, the second millimeter wave transceiver antenna array 22 may be arranged to rotate along with the rotatable door 55. Alternatively, the second millimeter wave transceiver antenna array 22 may be also hidden above the rotatable door 55 or below the rotatable door 55 in the housing 50 when the rotatable door 55 rotates, so as to prevent the rotation of the rotatable door 55 from being hindered.

In the above examples, the inlet 92, the outlet 93, the first millimeter wave transceiver antenna array 21 having the circular arc shape and the second millimeter wave transceiver antenna array 22 having the linear shape may be arranged in a plurality of forms, for example, the exemplified arrangements are shown in Figure 4 to Figure 6.

In the example of Figure 4, the first millimeter wave transceiver antenna array 21 having the circular arc shape and the second millimeter wave transceiver antenna array 22 having the linear shape are combined to form a closed arrangement. Thus, the inlet 92 and the outlet 93 need to be opened and closed by the rotatable door 55. In this way, the scanning operation will have good closure and the millimeter wave three dimensional holographic scan imaging apparatus 100" may be designed more compact to further reduce its footprint.

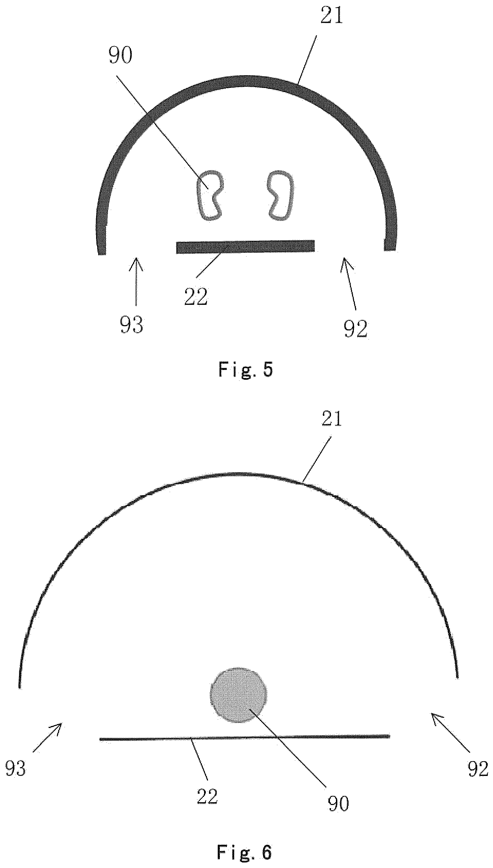

In the example of Figure 5, the first millimeter wave transceiver antenna array 21 having the circular arc shape and the second millimeter wave transceiver antenna array 22 having the linear shape are not combined to form a closed arrangement, but the inlet 92 and the outlet 93 are arranged at two sides of the second millimeter wave transceiver antenna array 22. Such arrangement may need relatively large footprint, but may avoid use of the rotatable door 55 while scanning the object 90 to be inspected in full field of view.

In the example of Figure 6, the distance between the first millimeter wave transceiver antenna array 21 and the second millimeter wave transceiver antenna array 22 is further increased and the inlet 92 and the outlet 93 arranged between the first millimeter wave transceiver antenna array 21 having the circular arc shape and the second millimeter wave transceiver antenna array 22 having the linear shape have larger opening angles. Such arrangement may cause the object 90 to enter and exit more conveniently. The object 90 may enter and exit the millimeter wave three dimensional holographic scan imaging apparatus 100" along linear paths without turning. However, such arrangement may prevent a part of the object 90 (for example the part facing towards the inlet 92 and the outlet 93) from being scanned.

As an example, the above rotatable door 55 may also use a wall structure of double layers similar to the first door device 51 and the second door device 52 to accommodate the second millimeter wave transceiver antenna array 22 between the double layers during scanning.

Regarding the millimeter wave three dimensional holographic scan imaging apparatus 100', 100" having the first millimeter wave transceiver antenna array 21 and the second millimeter wave transceiver antenna array 22, as an example, they may be arranged such that the first millimeter wave transceiver antenna array 21 and the second millimeter wave transceiver antenna array 22 are prevented from facing towards each other in most period during scanning, to reduce disturbance between the first millimeter wave transceiver antenna array 21 and the second millimeter wave transceiver antenna array 22. However, it is not necessary, for example, the first millimeter wave transceiver antenna array 21 and the second millimeter wave transceiver antenna array 22 may also scan synchronously in the same scanning direction.

In another example, the first millimeter wave transceiver antenna array 21 and the second millimeter wave transceiver antenna array 22 may also scan at different speeds (for example, in case that different sides or different local parts of the object to be inspected may need to be scanned at different resolutions), which may achieve a balance between detection precision and efficiency. As an example, the speeds of the millimeter wave transceiver antenna array 20, the first millimeter wave transceiver antenna array 21 and the second millimeter wave transceiver antenna array 22 may be constant or variable in the scanning. The latter may achieve variable-speed scanning, so as to provide more flexibility for the inspection work.

As an example, at least one millimeter wave transceiver antenna array may be provided with a row of transmitting antennas and a row of receiving antennas misaligned with the transmitting antennas. For example, the row of receiving antennas may be arranged in parallel to the row of transmitting antennas, but the row of receiving antennas may be offset by half of antenna pitch in horizontal direction with respect to the row of transmitting antennas. When the antenna array works, at each time, only one transmitting antenna and one receiving antenna adjacent to it work. By triggering an electronic switch, fast scanning in the horizontal direction may be achieved. The millimeter wave transceiver system uses a step-frequency continuous wave scanning method. The frequency scanning range may be 24-30 GHz or 27-33GHz. The number of frequency scanning points depends on the maximum imaging distance.

During scanning of the millimeter wave transceiver antenna array, as an example, when all of transceiver elements have worked at a certain height, the millimeter wave transceiver antenna array moves to the next vertical position to perform fast scanning in the above horizontal direction. As the whole row of antennas has very fast scanning speed in the horizontal direction, the scanning antenna array may move continuously in the vertical direction at higher speed. By means of driving the driving wheels or the driving shaft connected to the driving wheels to move by the driving motor and connecting them or it to the antenna array by the guiding device, the above movements may be achieved. When two antenna arrays move across the vertical height of the whole apparatus respectively, one scanning will end. At that time, the object to be inspected may exit from the inspection region directly from the outlet 93, that is, this inspection is finished.

As an example, when the millimeter wave transceivers and the millimeter wave transceiver antenna arrays work, a millimeter wave source may generate two ways of millimeter wave signals. One way of millimeter wave signal is used as a transmitting signal and the millimeter wave is transmitted by an amplifier and transmitting antennas to the object to be inspected; the other way of millimeter wave signal is used as a reference signal and mixed with the millimeter wave signal received by the receiving antennas to obtain the millimeter wave holographic data by I/Q demodulation. As an example, all of the millimeter wave transceiver antenna arrays (for example the first millimeter wave transceiver antenna array and the second millimeter wave transceiver antenna array) may use the same millimeter wave scanning frequency.

Alternatively, in order to reduce the signal disturbance between the first millimeter wave transceiver antenna array and the second millimeter wave transceiver antenna array, in an example, the first millimeter wave signal transmitted and received by the first millimeter wave transceiver antenna array and the second millimeter wave signal transmitted and received by the second millimeter wave transceiver antenna array may have different frequencies. Or, in another example, the first millimeter wave transceiver antenna array may transmit millimeter waves at a time different from a time when the second millimeter wave transceiver antenna array transmits millimeter waves during scanning the object to be inspected by both the first millimeter wave transceiver antenna array and the second millimeter wave transceiver antenna array, that is, the first millimeter wave transceiver antenna array and the second millimeter wave transceiver antenna array transmit the respective millimeter waves at different times, i.e., do not transmit millimeter waves at the same time. It may also reduce or avoid the signal disturbance between the first millimeter wave transceiver antenna array and the second millimeter wave transceiver antenna array.

The millimeter wave three dimensional holographic scan imaging apparatus 100, 100', 100" according to the embodiments of the present invention may reduce the footprint of the millimeter wave inspection system and increase the inspection efficiency.

Although the present invention has been explained with reference to the drawings, the embodiments shown in the drawings are only illustrative, instead of limiting the present invention.

## Claims

1. A millimeter wave three dimensional holographic scan imaging apparatus (100, 100', 100"), comprising:
at least one millimeter wave transceiver (10) and at least one millimeter wave transceiver antenna array (20) electrically connected to the at least one millimeter wave transceiver (10) respectively, the at least one millimeter wave transceiver antenna array (20) being configured to transmit and receive at least one millimeter wave signal;
at least one guiding device (30), to which the at least one millimeter wave transceiver antenna array (10) is connected respectively such that the at least one millimeter wave transceiver antenna array (20) moves along with the at least one guiding device (30) to scan peripheral sides of an object (90) to be inspected, the at least one millimeter wave transceiver antenna array (20) extending in a direction perpendicular to the at least one guiding device (30) respectively;
a driver (40) configured to drive the at least one guiding device (30) to move so as to drive the at least one millimeter wave transceiver antenna array (20) to scan along a linear track; and
a housing (50) configured to surround an inspection region (91) in which the object (90) is located during an inspection, the housing (50) being formed with an inlet (92) for the object (90) entering the inspection region (91) and an outlet (93) for the object (90) exiting the inspection region (91),
a first door device (51) arranged at the inlet (92); and a second door device (52) arranged at the outlet (93), wherein the first door device (51) and the second door device (52) are closed when the at least one millimeter wave transceiver antenna array (20) scans, and opened before the at least one millimeter wave transceiver antenna array (20) scans or after the at least one millimeter wave transceiver antenna array (20) scans,
the at least one millimeter wave transceiver antenna array (20) comprises a first millimeter wave transceiver antenna array (21) and a second millimeter wave transceiver antenna array (22), the first millimeter wave transceiver antenna array (21) being configured to transmit and receive a first millimeter wave signal and the second millimeter wave transceiver antenna array (22) being configured to transmit and receive a second millimeter wave signal; the at least one guiding device (30) comprises a first guiding device (31) and a second guiding device (32), wherein the first millimeter wave transceiver antenna array (21) is connected to the first guiding device (31) so as to move along with the first guiding device (31) along a first scanning track to scan a first side of the object (90) to be inspected and the second millimeter wave transceiver antenna array (22) is connected to the second guiding device (32) so as to move along with the second guiding device (32) along a second scanning track to scan a second side of the object (90);
**characterized in that** each of the first door device (51) and the second door device (52) has a first wall (53) and a second wall (54), and wherein said first and second millimeter wave transceiver antenna arrays (21, 22) are configured to pass between the first wall (53) and the second wall (54) while scanning, the first millimeter wave transceiver antenna array (21) and the second millimeter wave transceiver antenna array (22) being combined to surround the object (90) entirely.

2. The millimeter wave three dimensional holographic scan imaging apparatus (100, 100', 100") of claim 1, **characterized in that** scanning direction of each of the at least one millimeter wave transceiver antenna array (20) is a vertical direction and each of the at least one millimeter wave transceiver antenna array (20) extends along a horizontal direction.

3. The millimeter wave three dimensional holographic scan imaging apparatus (100) of claim 1, **characterized in that** the at least one millimeter wave transceiver antenna array (20) comprises a millimeter wave transceiver antenna array having a circular ring shape.

4. The millimeter wave three dimensional holographic scan imaging apparatus (100) of claim 3, **characterized in that** the inlet (92) and the outlet (93) are arranged at both sides of the inspection region (91) respectively.

5. The millimeter wave three dimensional holographic scan imaging apparatus (100) of claim 1, **characterized in that** the first wall (53) is closer to the inspecting region (91) than the second wall (54) and the first wall (53) is at least partly transparent to the millimeter wave signal.

6. The millimeter wave three dimensional holographic scan imaging apparatus (100') of claim 1, **characterized in that** each of the first millimeter wave transceiver antenna array (21) and the second millimeter wave transceiver antenna array (22) has a circular arc shape.

7. The millimeter wave three dimensional holographic scan imaging apparatus (100') of claim 1, **characterized in that** the inlet (92) and the outlet (93) are arranged at both sides of the inspection region (91) respectively.

8. A millimeter wave three dimensional holographic scan imaging apparatus (100, 100', 100"), comprising:
at least one millimeter wave transceiver (10) and at least one millimeter wave transceiver antenna array (20) electrically connected to the at least one millimeter wave transceiver (10) respectively, the at least one millimeter wave transceiver antenna array (20) being configured to transmit and receive at least one millimeter wave signal, wherein the at least one millimeter wave transceiver antenna array (20) comprises a first millimeter wave transceiver antenna array (21) and a second millimeter wave transceiver antenna array (22), the first millimeter wave transceiver antenna array (21) being configured to transmit and receive a first millimeter wave signal and the second millimeter wave transceiver antenna array (22) being configured to transmit and receive a second millimeter wave signal, **characterized in that** the first millimeter wave transceiver antenna array (21) has a circular arc shape and the second millimeter wave transceiver antenna array (22) has a linear shape;
at least one guiding device (30), to which the at least one millimeter wave transceiver antenna array (10) is connected respectively such that the at least one millimeter wave transceiver antenna array (20) moves along with the at least one guiding device (30) to scan peripheral sides of an object (90) to be inspected, the at least one millimeter wave transceiver antenna array (20) extending in a direction perpendicular to the at least one guiding device (30) respectively, wherein the at least one guiding device (30) comprises a first guiding device (31) and a second guiding device (32), wherein the first millimeter wave transceiver antenna array (21) is connected to the first guiding device (31) so as to move along with the first guiding device (31) along a first scanning track to scan a first side of the object (90) to be inspected and the second millimeter wave transceiver antenna array (22) is connected to the second guiding device (32) so as to move along with the second guiding device (32) along a second scanning track to scan a second side of the object (90);
a driver (40) configured to drive the at least one guiding device (30) to move so as to drive the at least one millimeter wave transceiver antenna array (20) to scan along a linear track;
a housing (50) configured to surround an inspection region (91) in which the object (90) is located during an inspection, the housing (50) being formed with an inlet (92) for the object (90) entering the inspection region (91) and an outlet (93) for the object (90) exiting the inspection region (91), the inlet (92) and the outlet (93) are arranged at a same side of the inspection region (91), and
a rotation door (55) having a first rotation position in which the rotation door (55) closes the inlet (92) and the outlet (93) and a second rotation position in which the rotation door (55) opens the inlet (92) and the outlet (93), wherein the rotation door (55) and the second millimeter wave transceiver antenna array (22) are arranged at a same side of the millimeter wave three dimensional holographic scan imaging apparatus, wherein each of the first door device (51) and the second door device (52) has a first wall (53) and a second wall (54), and wherein at least one of the millimeter wave transceiver antenna array (20) is configured to pass between the first wall (53) and the second wall (54) while scanning.

9. The millimeter wave three dimensional holographic scan imaging apparatus (100") of claim 8, **characterized in that** each of the inlet (92) and outlet (93) is located between the first millimeter wave transceiver antenna array (21) and the second millimeter wave transceiver antenna array (22).

## Patentansprüche

1. Dreidimensionale holographische Millimeterwellen-Abtastvorrichtung (100, 100', 100"), umfassend:
mindestens einen Millimeterwellen-Sendeempfänger (10) und mindestens ein Millimeterwellen-Sendeempfänger-Antennenarray (20), das jeweils mit dem mindestens einen Millimeterwellen-Sendeempfänger (10) elektrisch verbunden ist, wobei das mindestens eine Millimeterwellen-Sendeempfänger-Antennenarray (20) dazu konfiguriert ist, mindestens ein Millimeterwellensignal zu senden und zu empfangen,
mindestens eine Führungsvorrichtung (30), mit der das mindestens eine Millimeterwellen-Sendeempfänger-Antennenarray (20) jeweils so verbunden ist, dass sich das mindestens eine Millimeterwellen-Sendeempfänger-Antennenarray (20) zusammen mit der mindestens einen Führungsvorrichtung (30) bewegt, um Umfangsseiten eines zu inspizierenden Objekts (90) abzutasten, wobei sich das mindestens eine Millimeterwellen-Sendeempfänger-Antennenarray (20) jeweils in einer Richtung senkrecht zu der mindestens einen Führungsvorrichtung (30) erstreckt,
einen Treiber (40), der dazu konfiguriert ist, die mindestens eine Führungsvorrichtung (30) so anzutreiben, dass sie sich bewegt, um das mindestens eine Millimeterwellen-Sendeempfänger-Antennenarray (20) so anzutreiben, dass es entlang einer linearen Spur abtastet, und
ein Gehäuse (50), das dazu konfiguriert ist, einen Inspektionsbereich (91) zu umgeben, in dem sich das Objekt (90) während einer Inspektion befindet, wobei das Gehäuse (50) mit einem Einlass (92) für das Objekt (90), das in den Inspektionsbereich (91) eintritt, und einem Auslass (93) für das Objekt (90), das den Inspektionsbereich (91) verlässt, ausgebildet ist,
eine erste Türeinrichtung (51), die am Einlass (92) angeordnet ist, und eine zweite Türeinrichtung (52), die am Auslass (93) angeordnet ist, wobei die erste Türeinrichtung (51) und die zweite Türeinrichtung (52) geschlossen sind, wenn das mindestens eine Millimeterwellen-Sendeempfänger-Antennenarray (20) abtastet, und geöffnet sind, bevor das mindestens eine Millimeterwellen-Sendeempfänger-Antennenarray (20) abtastet oder nachdem das mindestens eine Millimeterwellen-Sendeempfänger-Antennenarray (20) abtastet,
wobei das mindestens eine Millimeterwellen-Sendeempfänger-Antennenarray (20) ein erstes Millimeterwellen-Sendeempfänger-Antennenarray (21) und ein zweites Millimeterwellen-Sendeempfänger-Antennenarray (22) umfasst, wobei das erste Millimeterwellen-Sendeempfänger-Antennenarray (21) dazu konfiguriert ist, ein erstes Millimeterwellensignal zu senden und zu empfangen, und das zweite Millimeterwellen-Sendeempfänger-Antennenarray (22) dazu konfiguriert ist, ein zweites Millimeterwellensignal zu senden und zu empfangen,
wobei die mindestens eine Führungsvorrichtung (30) eine erste Führungsvorrichtung (31) und eine zweite Führungsvorrichtung (32) umfasst, wobei das erste Millimeterwellen-Sendeempfänger-Antennenarray (21) mit der ersten Führungsvorrichtung (31) verbunden ist, um sich zusammen mit der ersten Führungsvorrichtung (31) entlang einer ersten Abtastspur zu bewegen, um eine erste Seite des zu inspizierenden Objekts (90) abzutasten, und das zweite Millimeterwellen-Sendeempfänger-Antennenarray (22) mit der zweiten Führungsvorrichtung (32) verbunden ist, um sich zusammen mit der zweiten Führungsvorrichtung (32) entlang einer zweiten Abtastspur zu bewegen, um eine zweite Seite des Objekts (90) abzutasten,
**dadurch gekennzeichnet, dass**
die erste Türvorrichtung (51) und die zweite Türvorrichtung (52) jeweils eine erste Wand (53) und eine zweite Wand (54) aufweisen, und wobei das erste und das zweite Millimeterwellen-Sendeempfänger-Antennenarray (21, 22) dazu konfiguriert sind, während der Abtastung zwischen der ersten Wand (53) und der zweiten Wand (54) durchzulaufen,
wobei das erste Millimeterwellen-Sendeempfänger-Antennenarray (21) und das zweite Millimeterwellen-Sendeempfänger-Antennenarray (22) so kombiniert sind, dass sie das Objekt (90) vollständig umgeben.

2. Dreidimensionale holographische Millimeterwellen-Abtastvorrichtung (100, 100', 100") nach Anspruch 1, **dadurch gekennzeichnet, dass** die Abtastrichtung jedes des mindestens einen Millimeterwellen-Sendeempfänger-Antennenarrays (20) eine vertikale Richtung ist und sich jedes des mindestens einen Millimeterwellen-Sendeempfänger-Antennenarrays (20) entlang einer horizontalen Richtung erstreckt.

3. Dreidimensionale holographische Millimeterwellen-Abtastvorrichtung (100) nach Anspruch 1, **dadurch gekennzeichnet, dass** das mindestens eine Millimeterwellen-Sendeempfänger-Antennenarray (20) ein Millimeterwellen-Sendeempfänger-Antennenarray mit einer kreisförmigen Ringform umfasst.

4. Dreidimensionale holographische Millimeterwellen-Abtastvorrichtung (100) nach Anspruch 3, **dadurch gekennzeichnet, dass** der Einlass (92) und der Auslass (93) jeweils an beiden Seiten des Inspektionsbereichs (91) angeordnet sind.

5. Dreidimensionale holographische Millimeterwellen-Abtastvorrichtung (100) nach Anspruch 1, **dadurch gekennzeichnet, dass** die erste Wand (53) näher am Inspektionsbereich (91) liegt als die zweite Wand (54) und die erste Wand (53) zumindest teilweise für das Millimeterwellensignal transparent ist.

6. Dreidimensionale holographische Millimeterwellen-Abtastvorrichtung (100') nach Anspruch 1, **dadurch gekennzeichnet, dass** sowohl das erste Millimeterwellen-Sendeempfänger-Antennenarray (21) als auch das zweite Millimeterwellen-Sendeempfänger-Antennenarray (22) eine Kreisbogenform haben.

7. Dreidimensionale holographische Millimeterwellen-Abtastvorrichtung (100') nach Anspruch 1, **dadurch gekennzeichnet, dass** der Einlass (92) und der Auslass (93) entsprechend an beiden Seiten des Inspektionsbereichs (91) angeordnet sind.

8. Dreidimensionale holographische Millimeterwellen-Abtastvorrichtung (100, 100', 100"), umfassend:
mindestens einen Millimeterwellen-Sendeempfänger (10) und mindestens ein Millimeterwellen-Sendeempfänger-Antennenarray (20), das jeweils elektrisch mit dem mindestens einen Millimeterwellen-Sendeempfänger (10) verbunden ist, wobei das mindestens eine Millimeterwellen-Sendeempfänger-Antennenarray (20) dazu konfiguriert ist, mindestens ein Millimeterwellensignal zu senden und zu empfangen, wobei das mindestens eine Millimeterwellen-Sendeempfänger-Antennenarray (20) ein erstes Millimeterwellen-Sendeempfänger-Antennenarray (21) und ein zweites Millimeterwellen-Sendeempfänger-Antennenarray (22) umfasst, wobei das erste Millimeterwellen-Sendeempfänger-Antennenarray (21) dazu konfiguriert ist, ein erstes Millimeterwellensignal zu senden und zu empfangen, und das zweite Millimeterwellen-Sendeempfänger-Antennenarray (22) dazu konfiguriert ist, ein zweites Millimeterwellensignal zu senden und zu empfangen,
**dadurch gekennzeichnet, dass**
das erste Millimeterwellen-Sendeempfänger-Antennenarray (21) eine Kreisbogenform hat und das zweite Millimeterwellen-Sendeempfänger-Antennenarray (22) eine lineare Form hat,
mindestens eine Führungsvorrichtung (30), mit der das mindestens eine Millimeterwellen-Sendeempfänger-Antennenarray (20) jeweils so verbunden ist, dass sich das mindestens eine Millimeterwellen-Sendeempfänger-Antennenarray (20) zusammen mit der mindestens einen Führungsvorrichtung (30) bewegt, um Umfangsseiten eines zu inspizierenden Objekts (90) abzutasten, wobei sich das mindestens eine Millimeterwellen-Sendeempfänger-Antennenarray (20) in einer Richtung senkrecht zu der mindestens einen Führungsvorrichtung (30) erstreckt,
wobei die mindestens eine Führungsvorrichtung (30) eine erste Führungsvorrichtung (31) und eine zweite Führungsvorrichtung (32) umfasst, wobei das erste Millimeterwellen-Sendeempfänger-Antennenarray (21) mit der ersten Führungsvorrichtung (31) verbunden ist, um sich zusammen mit der ersten Führungsvorrichtung (31) entlang einer ersten Abtastspur zu bewegen, um eine erste Seite des zu inspizierenden Objekts (90) abzutasten, und das zweite Millimeterwellen-Sendeempfänger-Antennenarray (22) mit der zweiten Führungsvorrichtung (32) verbunden ist, um sich zusammen mit der zweiten Führungsvorrichtung (32) entlang einer zweiten Abtastspur zu bewegen, um eine zweite Seite des Objekts (90) abzutasten,
einen Treiber (40), der dazu konfiguriert ist, die mindestens eine Führungsvorrichtung (30) so anzutreiben, dass sie sich bewegt, um das mindestens eine Millimeterwellen-Sendeempfänger-Antennenarray (20) so anzutreiben, dass es entlang einer linearen Spur abtastet,
ein Gehäuse (50), das dazu konfiguriert ist, einen Inspektionsbereich (91) zu umgeben, in dem sich das Objekt (90) während einer Inspektion befindet, wobei das Gehäuse (50) mit einem Einlass (92) für das Objekt (90), das in den Inspektionsbereich (91) eintritt, und einem Auslass (93) für das Objekt (90), das den Inspektionsbereich (91) verlässt, ausgebildet ist, wobei der Einlass (92) und der Auslass (93) auf derselben Seite des Inspektionsbereichs (91) angeordnet sind, und
eine Drehtür (55) mit einer ersten Drehposition, in der die Drehtür (55) den Einlass (92) und den Auslass (93) schließt, und einer zweiten Drehposition, in der die Drehtür (55) den Einlass (92) und den Auslass (93) öffnet, wobei die Drehtür (55) und die zweite Millimeterwellen-Sendeempfänger-Antennenarray (22) auf derselben Seite der dreidimensionalen holographischen Millimeterwellen-Abtastvorrichtung angeordnet sind, wobei jede der ersten Türvorrichtung (51) und der zweiten Türvorrichtung (52) eine erste Wand (53) und eine zweite Wand (54) aufweist, und wobei mindestens eines der Millimeterwellen-Sendeempfänger-Antennenarrays (20) dazu konfiguriert ist, während der Abtastung zwischen der ersten Wand (53) und der zweiten Wand (54) durchzulaufen.

9. Dreidimensionale holographische Millimeterwellen-Abtastvorrichtung (100") nach Anspruch 8, **dadurch gekennzeichnet, dass** der Einlass (92) und der Auslass (93) jeweils zwischen der ersten Millimeterwellen-Sendeempfänger-Antennenarray (21) und der zweiten Millimeterwellen-Sendeempfänger-Antennenarray (22) angeordnet sind.

## Revendications

1. Appareil d'imagerie à balayage holographique en trois dimensions à ondes millimétriques (100, 100', 100") comprenant :
au moins un émetteur-récepteur à ondes millimétriques (10) et au moins un réseau d'antennes à émetteur-récepteur à ondes millimétriques (20) électriquement raccordé au au moins un émetteur-récepteur à ondes millimétriques (10) respectivement, le au moins un réseau d'antenne à émetteur-récepteur à ondes millimétriques (20) étant configuré pour transmettre et recevoir au moins un signal d'ondes millimétriques ;
au moins un dispositif de guidage (30) auquel le au moins un réseau d'antennes à émetteur-récepteur à ondes millimétriques (10) est raccordé respectivement de sorte que le au moins un réseau d'antennes à émetteur-récepteur à ondes millimétriques (20) se déplace conjointement avec le au moins un dispositif de guidage (30) pour balayer des côtés périphériques d'un objet (90) à contrôler, le au moins réseau d'antennes à émetteur-récepteur à ondes millimétriques (20) s'étendant dans une direction perpendiculaire au au moins un dispositif de guidage (30) respectivement ;
un dispositif d'entraînement (40) configuré pour entraîner le au moins un dispositif de guidage (30) afin de se déplacer pour entraîner le au moins un réseau d'antennes à émetteur-récepteur à ondes millimétriques (20) pour balayer le long d'une voie linéaire ; et
un boîtier (50) configuré pour entourer une région de contrôle (91) dans laquelle l'objet (90) est positionné pendant un contrôle, le boîtier (50) étant formé avec une entrée (92) pour l'objet (90) entrant dans la région de contrôle (91) et une sortie (93) pour l'objet (90) sortant de la région de contrôle (91),
un premier dispositif de porte (51) agencé au niveau de l'entrée (92) ; et un second dispositif de porte (52) agencé au niveau de la sortie (93), dans lequel le premier dispositif de porte (51) et le second dispositif de porte (52) sont fermés lorsque le au moins un réseau d'antennes à émetteur-récepteur à ondes millimétriques (20) balaie, et fermés avant que le au moins un réseau d'antennes à émetteur-récepteur à ondes millimétriques (20) ne balaie ou après que le au moins un réseau d'antennes à émetteur-récepteur à ondes millimétriques (20) a balayé,
le au moins un réseau d'antennes à émetteur-récepteur à ondes millimétriques (20) comprend un premier réseau d'antennes à émetteur-récepteur à ondes millimétriques (21) et un second réseau d'antennes à émetteur-récepteur à ondes millimétriques (22), le premier réseau d'antennes à émetteur-récepteur à ondes millimétriques (21) étant configuré pour transmettre et recevoir un premier signal d'ondes millimétriques et le second réseau d'antennes à émetteur-récepteur à ondes millimétriques (22) étant configuré pour transmettre et recevoir un second signal d'ondes millimétriques ; le au moins un dispositif de guidage (30) comprend un premier dispositif de guidage (31) et un second dispositif de guidage (32), dans lequel le premier réseau d'antennes à émetteur-récepteur à ondes millimétriques (21) est raccordé au premier dispositif de guidage (31) afin de se déplacer conjointement avec le premier dispositif de guidage (31) le long d'une première voie de balayage pour balayer un premier côté de l'objet (90) à contrôler et le second réseau d'antennes à émetteur-récepteur à ondes millimétriques (22) est raccordé au second dispositif de guidage (32) afin de se déplacer conjointement avec le second dispositif de guidage (32) le long d'une seconde voie de balayage afin de balayer un second côté de l'objet (90) ;
**caractérisé en ce que** :
chacun parmi le premier dispositif de porte (51) et le second dispositif de porte (52) a une première paroi (53) et une seconde paroi (54), et dans lequel lesdits premier et second réseaux d'antennes à émetteur-récepteur à ondes millimétriques (21, 22) sont configurés pour passer entre la première paroi (53) et la seconde paroi (54) tout en balayant, le premier réseau d'antennes à émetteur-récepteur à ondes millimétriques (21) et le seconde réseau d'antennes à émetteur-récepteur à ondes millimétriques (22) étant combinés pour entourer complètement l'objet (90).

2. Appareil d'imagerie à balayage holographique en trois dimensions à ondes millimétriques (100, 100', 100") selon la revendication 1, **caractérisé en ce que** la direction de balayage de chacune du moins un réseau d'antennes à émetteur-récepteur à ondes millimétriques (20) est une direction verticale et chacune du au moins un réseau d'antennes à émetteur-récepteur à ondes millimétriques (20) s'étend le long d'une direction horizontale.

3. Appareil d'imagerie à balayage holographique en trois dimensions à ondes millimétriques (100) selon la revendication 1, **caractérisé en ce que** le au moins un réseau d'antennes à émetteur-récepteur à ondes millimétriques (20) comprend un réseau d'antennes à émetteur-récepteur à ondes millimétriques ayant une forme annulaire circulaire.

4. Appareil d'imagerie à balayage holographique en trois dimensions à ondes millimétriques (100) selon la revendication 3, **caractérisé en ce que** l'entrée (92) et la sortie (93) sont respectivement agencées des deux côtés de la région de contrôle (91).

5. Appareil d'imagerie à balayage holographique en trois dimensions à ondes millimétriques (100) selon la revendication 1, **caractérisé en ce que** la première paroi (53) est plus proche de la région de contrôle (91) que la seconde paroi (54) et la première paroi (53) est au moins partiellement transparente au signal d'ondes millimétriques.

6. Appareil d'imagerie à balayage holographique en trois dimensions à ondes millimétriques (100') selon la revendication 1, **caractérisé en ce que** chacun parmi le premier réseau d'antennes à émetteur-récepteur à ondes millimétriques (21) et le second réseau d'antennes à émetteur-récepteur à ondes millimétriques (22) a une forme d'arc circulaire.

7. Appareil d'imagerie à balayage holographique en trois dimensions à ondes millimétriques (100') selon la revendication 1, **caractérisé en ce que** l'entrée (92) et la sortie (93) sont respectivement agencées des deux côtés de la région de contrôle (91).

8. Appareil d'imagerie à balayage holographique en trois dimensions à ondes millimétriques (100, 100', 100") comprenant :
au moins un émetteur-récepteur à ondes millimétriques (10) et au moins un réseau d'antennes à émetteur-récepteur à ondes millimétriques (20) électriquement raccordé au au moins un émetteur-récepteur à ondes millimétriques (10) respectivement, le au moins un réseau d'antennes à émetteur-récepteur à ondes millimétriques (20) étant configuré pour transmettre et recevoir au moins un signal d'ondes millimétriques, dans lequel le au moins un réseau d'antennes à émetteur-récepteur à ondes millimétriques (20) comprend un premier réseau d'antennes à émetteur-récepteur à ondes millimétriques (21) et un second réseau d'antennes à émetteur-récepteur à ondes millimétriques (22), le premier réseau d'antennes à émetteur-récepteur à ondes millimétriques (21) étant configuré pour transmettre et recevoir un premier signal d'ondes millimétriques et le second réseau d'antennes à émetteur-récepteur à ondes millimétriques (22) étant configuré pour transmettre et recevoir un second signal d'ondes millimétriques, **caractérisé en ce que** :
le premier réseau d'antennes à émetteur-récepteur à ondes millimétriques (21) a une forme d'arc circulaire et le second réseau d'antennes à émetteur-récepteur à ondes millimétriques (22) a une forme linéaire ;
au moins un dispositif de guidage (30) auquel le au moins un réseau d'antennes à émetteur-récepteur à ondes millimétriques (10) est respectivement raccordé de sorte que le au moins un réseau d'antennes à émetteur-récepteur à ondes millimétriques (20) se déplace conjointement avec le au moins un dispositif de guidage (30) pour balayer les côtés périphériques d'un objet (90) à contrôler, le au moins un réseau d'antennes à émetteur-récepteur à ondes millimétriques (20) s'étendant dans une direction perpendiculaire au au moins un dispositif de guidage (30) respectivement, dans lequel le au moins un dispositif de guidage (30) comprend un premier dispositif de guidage (31) et un second dispositif de guidage (32), dans lequel le premier réseau d'antennes à émetteur-récepteur à ondes millimétriques (21) est raccordé au premier dispositif de guidage (31) afin de se déplacer conjointement avec le premier dispositif de guidage (31) le long d'une première voie de balayage, pour balayer un premier côté de l'objet (90) à contrôler et le second réseau d'antennes à émetteur-récepteur à ondes millimétriques (22) est raccordé au second dispositif de guidage (32) afin de se déplacer conjointement avec le second dispositif de guidage (32) le long d'une seconde voie de balayage pour balayer un second côté de l'objet (90) ;
un dispositif d'entraînement (40) configuré pour entraîner le au moins un dispositif de guidage (30) pour se déplacer afin d'entraîner le au moins un réseau d'antennes à émetteur-récepteur à ondes millimétriques (20) pour balayer le long d'une voie linéaire ;
un boîtier (50) configuré pour entourer une région de contrôle (91) dans laquelle l'objet (90) est positionné pendant un contrôle, le boîtier (50) étant formé avec une entrée (92) pour l'objet (90) entrant dans la région de contrôle (91) et une sortie (93) pour l'objet (90) sortant de la région de contrôle (91), l'entrée (92) et la sortie (93) sont agencées sur un même côté de la région de contrôle (91), et
une porte de rotation (55) ayant une première position de rotation dans laquelle la porte de rotation (55) ferme l'entrée (92) et la sortie (93) et une seconde position de rotation dans laquelle la porte de rotation (55) ouvre l'entrée (92) et la sortie (93), dans lequel la porte de rotation (55) et le second réseau d'antennes à émetteur-récepteur à ondes millimétriques (22) sont agencés du même côté de l'appareil d'imagerie à balayage holographique en trois dimensions à ondes millimétriques, dans lequel chacun parmi le premier dispositif de porte (51) et le second dispositif de porte (52) a une première paroi (53) et une seconde paroi (54), et dans lequel au moins l'une du réseau d'antennes à émetteur-récepteur à ondes millimétriques (20) est configurée pour passer entre la première paroi (53) et la seconde paroi (54) tout en balayant.

9. Appareil d'imagerie à balayage holographique en trois dimensions à ondes millimétriques (100") selon la revendication 8, **caractérisé en ce que** chacune parmi l'entrée (92) et la sortie (93) est positionnée entre le premier réseau d'antennes à émetteur-récepteur à ondes millimétriques (21) et le second réseau d'antennes à émetteur-récepteur à ondes millimétriques (22).
